(19) **Europäisches Patentamt**

**European Patent Office**

**Office européen des brevets**

(11) **EP 0 698 518 B1**

(12) **EUROPÄISCHE PATENTSCHRIFT**

(45) Veröffentlichungstag und Bekanntmachung des Hinweises auf die Patenterteilung:
**12.11.1997 Patentblatt 1997/46**

(51) Int. Cl.$^6$: **B60K 41/12**

(21) Anmeldenummer: **95112738.0**

(22) Anmeldetag: **12.08.1995**

(54) **Verfahren und Steuereinrichtung zur Steuerung des Antriebsstrangs eines Arbeitsfahrzeuges**

Method and controlling means for controlling the propulsion unit of a working vehicle

Procédé et appareil de commande pour commander l'unité d'entraînement d'un véhicule de travail

(84) Benannte Vertragsstaaten:
**AT DE FR GB IT**

(30) Priorität: **27.08.1994 DE 4430447**

(43) Veröffentlichungstag der Anmeldung:
**28.02.1996 Patentblatt 1996/09**

(73) Patentinhaber: **DEERE & COMPANY**
**Moline, Illinois 61265 (US)**

(72) Erfinder: **Weiss, Heinz**
**D-64625 Bensheim (DE)**

(74) Vertreter:
**Feldmann, Bernhard et al**
**DEERE & COMPANY**
**European Office**
**Patent Department**
**68140 Mannheim (DE)**

(56) Entgegenhaltungen:
| | |
|---|---|
| **EP-A- 0 280 757** | **EP-A- 0 415 048** |
| **DE-A- 3 533 193** | **DE-A- 3 628 490** |
| **DE-A- 4 115 623** | **DE-A- 4 223 967** |

Printed by Rank Xerox (UK) Business Services
2.14.23/3.4

**Beschreibung**

Die Erfindung betrifft ein Verfahren und eine Steuereinrichtung zur Steuerung des Antriebsstrangs eines Arbeitsfahrzeuges, welches eine Antriebsmaschine mit Einspritzmengenregelung und ein stufenlos verstellbares Getriebe (IVT) enthält, bei denen eine anfängliche Motorausgangsdrehzahl, eine anfängliche Raddrehzahl, die aktuelle Motordrehzahl und die aktuelle Raddrehzahl erfaßt und gespeichert werden.

Der Antriebsstrang von Arbeitsfahrzeugen, wie landwirtschaftlichen oder gewerblichen Fahrzeugen enthält im wesentlichen einen Verbrennungsmotor und ein Getriebe. Der Motor hat die Aufgabe, die geforderte Leistung mit möglichst gutem Wirkungsgrad bereitzustellen, während das Getriebe als Drehmoment- und Drehzahlwandler das Kennfeld des Motors an das Bedarfsfeld des Fahrzeugs anpaßt. Bei der Weiterentwicklung des Antriebsstrangs treten neben den bisher vorrangigen Zielen einer Produktivitätssteigerung und einer Erhöhung des Komforts für den Fahrer zunehmend weitere Aspekte wie Emissionsverhalten und Kraftstoffverbrauch in den Vordergrund.

Um diese Ziele zu erreichen, können stufenlos verstellbare Getriebe, wie sie beispielsweise durch die DE-A-35 33 193 und DE-A-41 15 623 beschrieben wurden, vorteilhaft eingesetzt werden. Es handelt sich hier um hydrostatisch-mechanische Leistungsverzweigungsgetriebe mit einem stufenlos verstellbaren hydrostatischen Teil, bestehend aus Verstellpumpe und Hydromotor, und einem mechanischen Zweig mit einigen Gängen, die ohne Zugkraftunterbrechung automatisch geschaltet werden können. Das Übertragungsverhältnis dieser Getriebe ist stufenlos über den gesamten Fahrbereich einstellbar.

Die EP-A-0 280 757 beschreibt eine Steuer- und Regeleinrichtung für ein derartiges stufenlos einstellbares Getriebe. Es werden laufend die Motoristdrehzahl und die Abtriebsistdrehzahl des Getriebes erfaßt und mit den Soll-Stellsignalen verglichen. Durch eine ständige Veränderung der Getriebeübersetzung und der Motordrehzahl reagiert die Regelung auf Änderungen der Stellsignale oder der Fahrbedingungen. Bei steigendem Fahrtwiderstand wird zunächst die Motordrehzahl gedrückt, was in einem Fahrregler eine Vergrößerung des Motorregelsignals bewirkt, um eine höhere Motorleistung bereitzustellen. Ferner erfolgt eine Anpassung der Getriebeübersetzung, um die gewünschte Fahrgeschwindigkeit einzuhalten bzw. zu erreichen. Die Regeleinrichtung soll so ausgelegt werden, daß ständig die verbrauchsoptimale Getriebeübersetzung sowie die verbrauchsoptimale Motordrehzahl eingestellt wird.

Ferner wurde im Jahr 1989 durch F. Jarchow auf einer Fachtagung in Dresden ein stufenlos wirkendes hydrostatisch-mechanisches Lastschaltgetriebe für Traktoren mit einer Steuerung vorgeschlagen, die eine Regelung auf einer Kurve minimalen Kraftstoffverbrauchs erlaubt. Anhand einer optimalen Kraftstoffverbrauchskurve läßt sich für jede Gaspedalstellung eine zugehörige Spannung ermitteln, die mit einer der Getriebeeingangsdrehzahl entsprechenden Spannung verglichen wird. Die Spannungsdifferenz wird zur Verstellung der Getriebeübersetzung herangezogen.

Die der Erfindung zugrunde liegende Aufgabe besteht darin, ein erweitertes Verfahren und eine verbesserte Steuerungseinrichtung zur Steuerung des Antriebsstrangs von Arbeitsfahrzeugen der eingangs genannten Art anzugeben, durch die sich der Motor in Abhängigkeit vom Hauptfahrantrieb und gegebenenfalls von Sekundärantrieben für hydrostatische Pumpen, mechanische Zapfwellenantriebe und dergleichen hinsichtlich Produktivität, Kraftstoffeinsparung und Emissionsverhalten ohne zusätzlichen Aufwand für den Fahrer in einem günstigsten Arbeitsfeld betreiben läßt.

Die Aufgabe wird ausgehend von dem Oberbegriff der Patentansprüche 1 bzw. 9 durch deren kennzeichnende Merkmale gelöst. Weitere vorteilhafte Ausgestaltungen und Weiterbildungen der Erfindung gehen aus den Unteransprüchen hervor.

Durch die Erfindung läßt sich das Ziel eines verringerten Kraftstoffverbrauchs bei gleichzeitig zurückgehender Emission sowie eine Komfortsteigerung für die Bedienungsperson erreichen. Die vorgeschlagene Strategie der Getriebeanpassung ermöglicht einen Betrieb des Motors in wirkungsgradgünstigen Kennfeldbereichen. Sie realisiert darüberhinaus eine verbesserte Produktivität kombiniert mit höherer Wirtschaftlichkeit.

Um das Potential des Motors im Sinne der Aufgabenstellung voll auszunutzen, wird der Betriebspunkt des Motors durch Erhöhung (Erniedrigung) der Getriebeübersetzung bei unveränderten Fahrzeugparametern wie Geschwindigkeit und Last entlang der Drehmomenthyperbel konstanter Leistung verstellt, wobei die Belastung steigt und die Drehzahl des Motors abnimmt.

Für die erfindungsgemäße Lösung wurde insbesondere die Erkenntnis genutzt, daß sich die Zugkrafthyperbeln des Fahrzeugs mit Hilfe der konstanten Achsuntersetzung auf die Hyperbeln konstanter Leistung des Antriebsstrangs normieren und abbilden lassen, so daß sich die Flächeninhalte und Beziehung der Rechtecke zu den Hyperbelpunkten leicht abschätzen und miteinander vergleichen lassen.

Aus Kostengründen wird vorerst weiter von einer mechanischen Einspritzpumpe ausgegangen, die hinsichtlich der Einstellung der Einspritzmenge vornehmlich von der Getriebelektronik angesteuert wird. Das vorgeschlagene Verfahren läßt sich jedoch problemlos auf elektronisch geregelte Einspritzpumpen übertragen.

Da das Arbeitsgebiet des Motors nur mit motorspezifischen Parametern beschrieben wird, kann das Verfahren zur Steuerung eines Antriebsstrangs auf alle stufenlos verstellbaren Getriebe mit Leistungsverzweigung angewendet werden und deckt somit sowohl das rein mechanische und stufenlos verstellbare Leistungsverzweigungsgetriebe Torotrak der Firma Leyland, wie alle rein hydrostatischen oder hydrostatisch-mechanischen Getriebe mit Leistungsverzweigung ab.

Die erfindungsgemäße Lösung ermöglicht eine einfache und flexible Steuerung von Getriebe und Motor, ohne daß Drehmomentaufnehmer erforderlich sind.

Anhand der Zeichnung werden ein Ausführungsbeispiel der Erfindung gezeigt und die Erfindung sowie weitere Vorteile und vorteilhafte Weiterbildungen und Ausgestaltungen der Erfindung erläutert.

Es zeigt:

Fig. 1        das Blockdiagramm einer der erfindungsgemäßen Steuereinrichtungen,

Fig. 2        die Charakteristik eines beispielhaften Motors mit Definition der Kurven zur Regelung des Antriebsstrangs und

Fig. 3 bis 5        weitere Motorcharakteristiken zur Beschreibung der der Erfindung zugrunde liegenden Zusammenhänge.

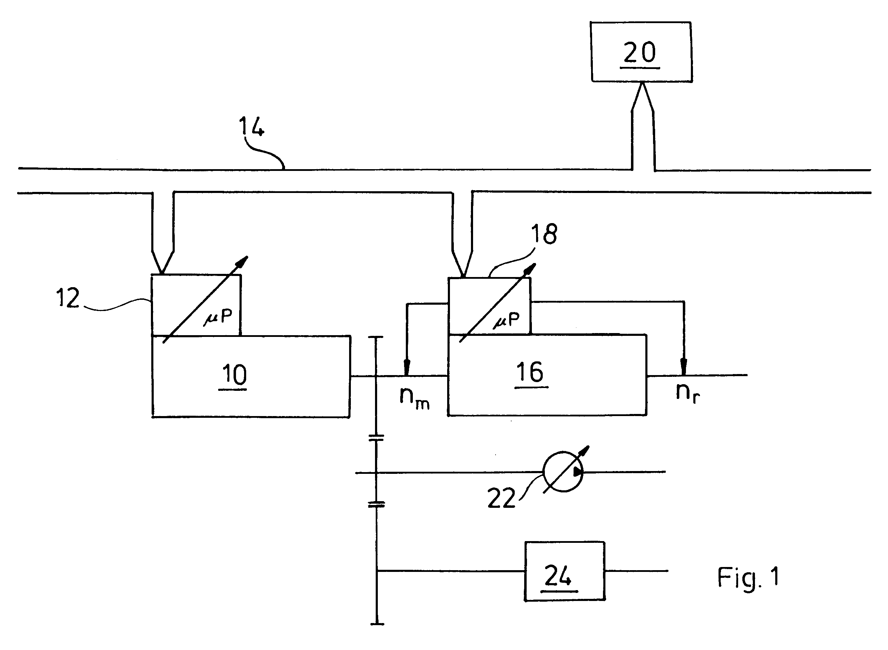

Das Blockdiagramm der Figur 1 zeigt einen drehzahlvariablen Motor 10, der durch einen als Mikroprozessor ausgebildeten Drehzahlsteller 12 ansteuerbar ist. Der Drehzahlsteller 12 ist vorzugsweise über einen CAN-Bus 14 oder über eine direkte Verbindung an einen Getriebe-Controller 18 angeschlossen, von dem er Steuersignale für die Einspritzpumpe des Motors 10 empfängt und an diese weitergibt. Die Einspritzpumpe ist damit nicht, wie bei konventionellen Fahrzeugen üblich, unmittelbar mit dem Gaspedal bzw. dem Handgashebel verbunden, sondern wird durch eine elektronische Regeleinheit eingestellt. Diese Regelung bestimmt unter Berücksichtigung des Fahrerwunsches (Hebel- und Pedaleinstellungen), der Betriebsbedingungen und des Kennfelds des Motors 10 die Einspritzmenge.

Der Motor 10 treibt ohne Zwischenschaltung einer Kupplung ein stufenlos verstellbares Getriebe 16 an. Das Übersetzungsverhältnis des Getriebes 16 wird durch den Controller 18 als Übersetzungssteller eingestellt, der als Mikroprozessor ausgebildet und ebenfalls an den CAN-Bus 14 angeschlossen ist. Die elektronische Steuerung der Einspritzpumpe 12 und die Regeleinheit 18 des Getriebes 16 arbeiten zusammen und können eventuell zu einer Baueinheit kombiniert werden. An den CAN-Bus 14 ist ferner eine Bedieneroberfläche 20 angeschlossen, über die eine Bedienungsperson Vorgaben zur Beeinflussung des Antriebsstrangs einstellen kann.

Der stufenlose Teil des Getriebes 16 besteht vorzugsweise aus einer Verstellpumpe mit Hydraulikmotor. Im mechanischen Zweig sind einige Gänge vorgesehen, die ohne Zugkraftunterbrechung automatisch geschaltet werden können. Das Getriebe ermöglicht über den stufenlosen Teil des Getriebes das Anfahren aus dem Stand ohne Anfahrkupplung. Für den Stillstand oder das Abbremsen des Fahrzeugs trennen nicht gezeigte Kupplungen den Antriebsstrang von den Treibrädern, um den Motor nicht abzuwürgen bzw. ein Arbeiten des Getriebes gegen die Bremsen zu vermeiden. Nach Beendigung des Bremsvorgangs schließen die Trennkupplungen bei Synchronlauf wieder automatisch. Anstelle eines derartigen Getriebes sind auch andere stufenlos einstellbare Getriebe verwendbar.

Elektronische Drehzahlmeßwertgeber erfassen die Motorausgangsdrehzahl $n_m$ und die Getriebeausgangsdrehzahl, die der normierten Raddrehzahl $n_r$ der Antriebsräder entspricht. Die Drehzahlen $n_m$ und $n_r$ werden durch die elektronische Steuereinheit ständig gemessen und gespeichert. Aus ihnen werden je nach Sollwertvorgabe die Betriebspunkte für Motor und Getriebe bestimmt.

An den Ausgang des Motors 10 ist mittels Zahnrädern unmittelbar eine Hydraulikpumpe 22 zur Versorgung der Fahrzeugkomponenten und der angeschlossenen Geräte sowie eine Gerätezapfwelle 24 gekoppelt. Diese drehen daher proportional zur Motordrehzahl.

Im Unterschied zu konventionellen Antriebskonzepten besitzt die Bedienungsperson des hier beschriebenen Fahrzeugs mit stufenlos verstellbarem Getriebe nun die Möglichkeit, über eine elektronische Regeleinheit (Antriebsmanagement) die Sollwertwünsche für Geschwindigkeit und Motordrehzahl etc. weiterzugeben. Eine direkte Beeinflussung des Motorbetriebspunktes oder der Getriebeübersetzung ist nicht mehr möglich.

Die Bedienungsperson gibt den Sollwert vor, und die elektronische Regelung bestimmt die Art und Weise, wie diese Einstellung realisiert werden soll. Die Sollwerteingabe für die Fahrgeschwindigkeit kann über einen Geschwindigkeitswahlhebel, ein Gaspedal oder eine im Bremspedal integrierte Retarderstufe erfolgen, die hier nicht dargestellt sind, jedoch beispielsweise in WO-94/06651 beschrieben wurden. Die Fahrzeuggeschwindigkeit wird mit dem Wahlhebel vorgegeben. Mit dem Retarder oder dem Gaspedal ist ein Modulieren der Vorwahlgeschwindigkeit möglich, wobei über das Fußgaspedal die Geschwindigkeit erhöht bzw. bei vergrößerter Last beibehalten wird, während der Retarder das Fahrzeug ohne reibende Elemente verzögert. Ein zusätzlicher Handgashebel legt eine bestimmte Motordrehzahl fest, die entweder konstant zu halten ist (Zapfwellenbetrieb) oder nicht unterschritten werden darf.

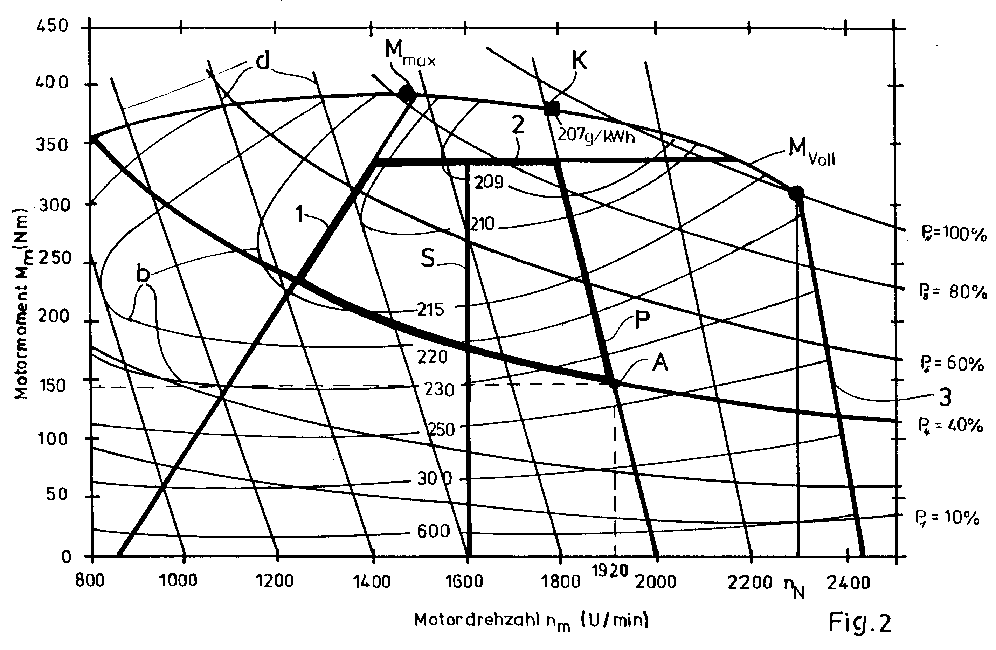

Das in Figur 2 dargestellte Motorkennfeld charakterisiert einen Motor, der für den Einsatz mit einem stufenlos verstellbaren Getriebe noch nicht optimal ausgelegt ist. Dieses erkennt man daran, daß der Punkt K des optimalen spezifischen Kraftstoffverbrauchs noch rechts vom Punkt $M_{max}$ des maximalen Motormomentes liegt.

Es wurde das Motormoment $M_m$ über der Ausgangsdrehzahl $n_m$ des Motors aufgetragen und die Vollastkurve $M_{Voll}$ eingetragen. Ferner sind die Drehmomenthyperbeln konstanter Leistung $P_i$, einschließlich der Nennleistung $P_N$ bei zugehöriger Nenndrehzahl $n_N$ ebenso wie die Linien der spezifischen Kraftstoffverbräuche b und Linien konstanter Einspritzpumpenstellung d eingezeichnet.

Die Linien d werden im folgenden als P-Geraden bezeichnet. Sie ergeben sich aus an dem konkreten Motor bei konstanter Einspritzpumpenstellung ermittelten Meßpunkten, aus denen P-Kurven gebildet werden, die ihrerseits linearisiert und als P-Geraden in einem Speicher des Controllers abgelegt werden.

Ein Arbeitsfeld des Motors wird nach Figur 2 durch folgende Linien bzw. Kurven definiert:

- die Drehmomenthyperbel konstanter Leistung ($P_4$ = 40%) des speziellen Anwendungsfalles, die sich aus Soll- und Istdrehzahl des Motors mit Hilfe der gespeicherten P-Geraden (proportionaler Drehmomentanstieg) ermitteln läßt,

- die Aufregellinie 1, die zur Abgrenzung des Rauchgebietes im Motorkennfeld vorzugsweise als Drehmomentgerade zwischen den Punkten der unteren Leerlaufdrehzahl und des maximalen Moments $M_{max}$ der Vollastkurve $M_{Voll}$ festgelegt wurde,

- die Vollastregellinie 2, die ebenfalls vorzugsweise als Gerade festgelegt ist und den Drehmomentverlauf im Bereich des günstigsten Kraftstoffverbrauchs definiert, und

- die P-Kurve, die wie bereits beschrieben als momentanes Kennfeld definiert ist, nach der der Motor bei einer gegebenen Einspritzmenge auf eine geänderte Last reagiert.

Stufenlos verstellbare Getriebe ohne Hauptkupplung haben eventuell den Nachteil, daß sie während des Anfahrvorgangs keine zusätzliche Energie aus dem Schwungrad ziehen können und somit ohne besondere Vorkehrungen als wenig reaktionsfreudig gelten können. Um diesem Verhalten entgegenzuwirken, verstellt das IVT-Getriebe beim Anfahrvorgang den Motor nicht entlang der Aufregellinie 1 oder gar links von dieser Kurve im Rauchgebiet, sondern gibt, eventuell sogar mit Hilfe des Handgases, mittlere Drehzahlen vor, um auf unbekannte Belastungsanforderungen vorbereitet zu sein.

In Figur 2 wurde entsprechend einer beispielhaften P-Kurve (stark hervorgehoben) mit einer vorgegebenen Einspritzmenge die Leerlaufdrehzahl auf 2000 1/min eingestellt. Die mechanische Einspritzpumpe ist hierbei in der Lage, durch ihre interne Charakteristik den Anforderungen einer Laststeigerung eigenständig nachzukommen, wobei die Drehzahl des Motors von 2000 1/min auf einen Wert von 1920 gedrückt wurde. Da die P-Kurve durch eine P-Gerade digital nachgebildet und im IVT-Controller abgelegt wurde, konnte auf diese Weise der Lastanteil mit x = 40 % des Nennmoments ermittelt werden.

Die 40-%-Drehmomenthyperbel ist hiermit definiert und besitzt mit der Aufregellinie 1 einen definierten Schnittpunkt, so daß sich die Drehzahl des Motors inkremental in Richtung auf diesen Punkt einstellen läßt. Hierzu sind eventuell mehrere Rechenzyklen notwendig, wobei sich gleichzeitig auch das Lastniveau von Rechenzyklus zu Rechenzyklus verändern kann. Die mechanische Einspritzpumpe kann diesen Anforderungen problemlos folgen, so daß ausgehend von der momentanen P-Geraden, einem bekannten Wert für die Solldrehzahl und dem gemessenen Wert für die Istdrehzahl die Eingabeparameter für den nächsten Rechenzyklus bereitstehen, wie im vorigen Abschnitt erläutert wurde.

Sollte mittels des Handgases in der Zwischenzeit eine Mindestdrehzahl des Motors vorgegeben worden sein, so errechnet sich der Schnittpunkt der Hyperbel nicht mehr mit der Aufregellinie 1 sondern mit der Senkrechten S zu der Drehzahl, die mit dem Handgas eingestellt wurde. Der Vorgang läuft auch hier inkremental ab. Aus dem Vieleck der Aufregellinie 1, der Vollastgeraden 2; der P-Geraden und der Belastungshyperbel läßt sich als Fläche der Grad der möglichen Wirkungsgradverbesserung abschätzen (Wirkungsgradvieleck). Es ist deutlich, daß die Handgaseinstellung die Fläche des Wirkungsgradvielecks fast halbiert hat.

In der gleichen Weise wird bei Zapfwellenbetrieb mit dem Unterschied verfahren, daß die Handgaseinstellung weiter nach rechts in die Nähe der P-Kurve bzw. der Auslegungsdrehzahl der ausgewählten Zapfwelle verschoben wird, um Zapfwellendrehzahl konstant vorzugeben. Das Wirkungsgradvieleck schrumpft hierbei fast zu einem Punkt zusammen.

Das Wirkungsgradvieleck und das an dem Punkt A ansetzende Rechteck unter der Drehmomenthyperbel geben somit einen guten Überblick über den Status des Antriebstrangs hinsichtlich Leistung und Wirkungsgrad.

Bei einem für die Anwendung mit IVT bevorzugten Motor sollte der Punkt für den günstigsten Kraftstoffverbrauch äußerst links und oben im Motorkennfeld liegen (das heißt bei geringer Motordrehzahl), um durch eine große Reduzierung der Motordrehzahl auch eine große Verbesserung der mechanischen Wirkungsgrade von Motor und Getriebe zu erzielen und um bei optimaler thermischer Auslastung des Motors die Wirkungsgrade noch weiter zu verbessern.

Die Vollastgerade 2 verläuft bei konstantem Drehmoment vorzugsweise oberhalb des Punktes der Nennleistung $P_N$ und beginnend bei Drehzahlen kleiner $n_N$, um eine Feinabstimmung des Kennfeldes des Motors mit dem des Getriebes zu ermöglichen. Die Abstimmung im Gebiet des günstigsten Kraftstoffverbrauchs erscheint unkritisch, solange die Muschelkurven flach liegende Elipsen darstellen. Die Vollastgerade 2 liegt zweckmäßigerweise 10 bis 15 % unterhalb der Vollastkurve $M_{Voll}$, um bei schweren Zugarbeiten eine Drehmomentreserve für Spitzenbelastungen vorzuhalten und auf der anderen Seite, das Getriebe über eine längere Zeit nicht zu überfordern.

Für relativ kleine Leistungen liegt der ausgeregelte Betriebspunkt des Motors auf der Aufregellinie 1. Bei einem weiteren Anstieg des Drehmoments verhält sich der Motor wie bereits beschrieben. Bei konstanter Einspritzmenge erhöht der Motor sein Drehmoment entlang der P-Kurve und der Betriebspunkt wandert über die Aufregellinie 1 hinaus nach links.

Da sich die Logik für die Ermittlung der Motorsoll- und -istwerte nicht geändert hat, kann auch die zugehörige Hyperbel konstanter Leistung, wie beschrieben, ermittelt werden. Bei Betrachtung des Schnittpunktes der Hyperbel mit der Aufregellinie 1 stellt sich jedoch heraus, daß die Hyperbel oberhalb der Ausgangshyperbel liegt und nur durch Drehzahlerhöhung mit der Aufregellinie 1 zum Schnitt gebracht werden kann. Das Ergebnis ist ein Schnittpunkt der neuen Hyperbel mit der Aufregellinie 1 auf höherem Niveau. Um die gewünschte Fahrgeschwindigkeit einzuhalten, ist eine Anpassung des Übersetzungsverhältnisses des Getriebes erforderlich.

Das beschriebene Verfahren trifft nach Figur 2 für Leistungsanforderungen bis zu etwa 63 % der Nennleistung zu. Die Hyperbeln größer 63 % schneiden die Aufregellinie 1 nicht mehr. Dafür haben sie jedoch einen Schnittpunkt mit der Vollastgeraden 2, so daß diese Einsatzfälle unterschieden werden müssen.

Für Leistungen größer 63 % liegt der günstigste Motorbetriebspunkt auf der Vollastgeraden 2. Eine Last- oder auch Geschwindigkeitserhöhung (-erniedrigung) erfordert somit einen Leistungszuwachs (-abfall) des Motors, d.h. der Motorbetriebspunkt verschiebt sich auf der Vollastgeraden 2 weiter nach rechts (links). Dies geschieht wiederum in inkrementalen Schritten durch eine Steigerung (Absenkung) der Motordrehzahl. Unterhalb der Vollastgeraden 2 stehen jedoch alle Möglichkeiten der Wirkungsgradverbesserung durch eine Änderung des Übersetzungsverhältnisses und eine Verringerung der Geschwindigkeit bei gleichzeitiger Anhebung des Drehmoments in Richtung der Vollastgerade zur Verfügung. Die mit der Geschwindigkeitsverringerung verbundene Widerstandsreduzierung (-erhöhung) macht eventuell eine weitere Übersetzungsanpassung erforderlich.

Die Abregellinie 3 zur Drehzahlbegrenzung des Dieselmotors dient dem Schutz des Motors gegen Überdrehzahlen, Störungen der Elektronik oder gegen unsachgemäße Bedienung der Bedienungsperson (z. B. Vollgas bei Leerlauf). Sie ist bei der mechanischen Einspritzpumpe mechanisch, wird bei zukünftigen Einspritzpumpen jedoch in zunehmendem Maße elektronisch realisiert.

Während eine Steigerung (Absenkung) der Fahrzeugleistung ausgehend von einem niedrigen Leistungsniveau (Aufregellinie 1) eine Verringerung (Erhöhung) des Übersetzungsverhältnisses bei gleichzeitiger Erhöhung (Verringerung) der Motordrehzahl erfordert, bedeutet eine Steigerung der Fahrleistung ausgehend von einem hohen Niveau (Vollastlinie 2) eine Erhöhung (Verringerung) des Übersetzungsverhältnisses bei gleichzeitiger Erhöhung (Verringerung) der Motordrehzahl.

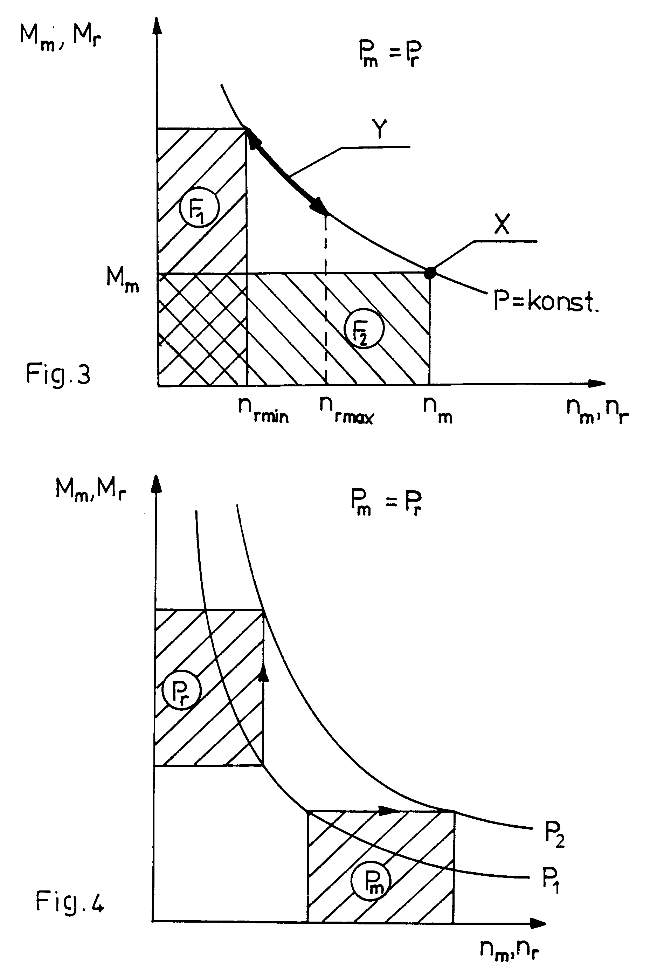

Das IVT erlaubt durch stufenlose Übersetzungsänderung das Befahren des ganzen Geschwindigkeitsbereichs bei gleicher Motorleistung. Wie aus Figur 3 hervorgeht, kann der Motorbetriebspunkt X durch Einstellung unterschiedlicher Getriebeübersetzungen i in einen durch Pfeile markierten Bereich Y der Zugkrafthyperbel verstellt werden, der zwischen einer minimalen Raddrehzahl $n_{rmin}$ und einer maximalen Raddrehzahl $n_{rmax}$ liegt. Aus den genannten Gründen könnte bei einem Fahrzeug mit IVT-Getriebe auf eine Konstantleistungscharakteristik des Motors verzichtet werden. Als Argument für die Beibehaltung der Konstantleistungscharakteristik können angeführt werden: größere Durchschlagskraft für schwere Zapfwellengeräte und eine mögliche Konsolidierung der Kennfelder von Motor und Getriebe.

Eine anschauliche Betrachtung der Leistung ermöglicht ihre Darstellung als Fläche im Drehmoment-Drehzahldiagramm. Wegen der Beziehung "P = M x n " sind alle Flächen $F_1$, $F_2$ unterhalb einer Leistungshyperbel flächengleich und stellen ein Maß für die Leistung dar (Fig. 3). Dies gilt auch für die Flächen der Differenzleistung, die z. B. vom Motor für eine Lasterhöhung bereitzustellen ist (Fig. 4).

Der Einfachheit halber wurde hierbei der Wirkungsgrad $\eta$ zunächst außer Acht gelassen bzw. gleich 1 gesetzt. Einschränkungen dieser Art bestehen jedoch nicht, da sich der Wirkungsgrad in den nachfolgen Gleichungen herauskürzt.

In Abhängigkeit von den auftretenden Stör- und Führungsgrößen werden durch geeignete Kontrollstrategien die notwendigen Einstellungen für einen neuen Betriebspunkt (IVT-Übersetzung, Motordrehzahl) ermittelt. Zu diesem Zweck werden die Motordrehzahl $n_m$ und die Abtriebsdrehzahl $n_r$ kontinuierlich gemessen und gespeichert. Um eine Laständerung zu erkennen, ist es notwendig, eine Raddrehzahl- oder Motordrehzahlabsenkung (-anhebung) zuzulassen und zu registrieren, bevor der Regelprozeß in Gang gesetzt werden kann.

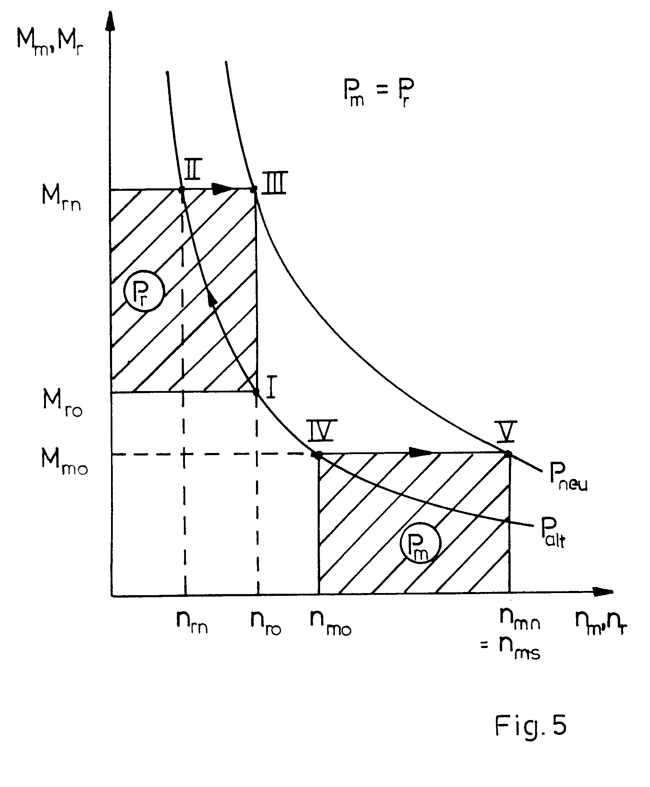

Anhand der Figur 5 wird im folgenden die Kontrollstrategie bei Lasterhöhung (Motordrückung) erläutert. Der Motor wird auf der Vollastlinie, d. h. bei $M_{mo}$ = konst . betrieben. Die gewünschte Fahrtgeschwindigkeit und daher auch die Raddrehzahl $n_{ro}$ soll im Endeffekt konstant gehalten werden. Die zeitliche Raddrehzahlabsenkung durch Motordrückung wird als vernachlässigbar angesehen und im Verlauf der Regelung korrigiert.

Es werden die nachfolgenden Abkürzungen verwandt:

| | |
|---|---|
| $n_{mo}$ | Motorausgangsdrehzahl (gemessen) |
| $n_{mn}$ | neue Motordrehzahl (gemessen) |
| $n_{ms}$ | Motorsolldrehzahl (errechnet) |
| $n_{ro}$ | Radausgangsdrehzahl (gemessen) |

$n_{rn}$     neue Raddrehzahl (gemessen)

$n_{rs}$     Radsolldrehzahl (vorgegeben)

$M_{mo}$    konstantes Motorausgangsmoment

$M_{ro}$    Ausgangsmoment des Rades

$M_{rn}$    neues Moment des Rades

$i_o$       IVT-Übersetzung im Ausgangspunkt (errechnet)

$i_n$       neue IVT-Übersetzung (errechnet)

Laut Voraussetzung sind die Ein- und Ausgangsleistungen des Getriebes in folgender Weise miteinander verknüpft:

$$\eta \times 2\pi \times M_{mo} \times n_{mo} = 2\pi \times M_{ro} \times n_{ro} \tag{1}$$

Wegen der Flächengleichheit der Rechtecke nach Figur 5 gilt obige Beziehung auch für Differenzleistungen:

$$\eta \times 2\pi \times (n_{mn} - n_{mo}) \times M_{mo} = 2\pi \times n_{ro} \times (M_{rn} - M_{ro}) \tag{2}$$

Hieraus folgt für einen Übergang von (I) nach (III) für das Getriebe bzw. von (IV) nach (V) für den Motor:

$$n_{mn} = n_{mo} \times M_{ro}/M_{rn} \quad \text{und} \tag{3}$$

$$i_n = n_{mn}/n_{rn} = n_{mo}/n_{ro} \times M_{ro}/M_{rn} \tag{4}$$

Da diese Gleichungen noch ein Momentenverhältnis enthalten, aus technischen Gründen jedoch nur Drehzahlen gemessen werden sollen, ist eine Zerlegung des Vorgangs in zwei Phasen notwendig.

In der ersten Phase wird auf die festgestellte Motordrückung ($n_{mn} < n_{mo}$) reagiert, indem die Übersetzung ($i = n_m/n_r$) des IVT gesteigert und somit die Raddrehzahl ($n_r$) gesenkt wird, bis die anfängliche Motordrückung kompensiert und die Motorausgangsdrehzahl ($n_{mo}$) wieder erreicht ist. Durch die Steigerung des Übersetzungsverhältnisses wird der Arbeitspunkt des Raddrehmoments entlang der in Fig. 5 dargestellten Drehmomenthyperbel von (I) nach (II) und damit von $M_{ro}$ auf $M_{rn}$ verstellt. Diese Kompensation sorgt dafür, daß der Motorbetriebspunkt (IV) unverändert bleibt.

In der zweiten Phase werden die Motordrehzahl (durch Erhöhung der Kraftstoffeinspritzmenge) und die Raddrehzahl bei konstanten Motor- und Radmomenten so lange gesteigert, bis die ursprüngliche Fahrgeschwindigkeit, die durch die Übersetzungsverstellung des ersten Schrittes abgesenkt wurde, wieder erreicht ist. Dabei werden sowohl die Motorleistung als auch die Radleistung angehoben und die Arbeitspunkte gehen in Fig. 5 von (IV) auf (V) für den Motor bzw. von (II) auf (III) für das Getriebe über.

Das Ziel ist es, eine möglichst geringe Abweichung von der Solldrehzahl der Räder (hier: $n_{rs} = n_{ro}$) zu erreichen. Deshalb erfolgt eine Prozessregelung nach Phase 1 und 2 in kurzen Zeitintervallen und/oder sofern die Motordrehzahl infolge einer Änderung der Fahrzeugbelastung um einen vorgebbaren Wert unter- oder überschritten wird.

Insbesondere wird in der ersten Phase wie folgt verfahren:

Bei Lasterhöhung (siehe das in Fig. 5 dargestellte Beispiel) ist $n_{mo}/n_{mn} > 1$. Solange $n_{mn} < n_{mo}$ ist, wird die IVT-Übersetzung erhöht, wobei sich die Raddrehzahl erniedrigt. Aus den obigen Gleichungen läßt sich für die neue Übersetzung folgende Beziehung ableiten:

$$i_n = i_o \times n_{mo}/n_{mn} \tag{5}$$

Bleibt die Last unverändert, so ist $n_{mo}/n_{mn} = 1$. Daraus folgt, $i_n = i_o$, und es erfolgt keine Änderung der Übersetzung des IVT.

Bei Lasterniedrigung ist $n_{mo}/n_{mn} < 1$. Solange $n_{mn} > n_{mo}$ ist, wird die IVT-Übersetzung erniedrigt, wobei sich die Raddrehzahl erhöht. Die neue Übersetzung errechnet sich auch hier nach der Beziehung (5).

In der zweiten Phase wird insbesondere wie folgt verfahren:

Bei gewünschten Geschwindigkeits- bzw. Lasterhöhungen ist $n_{rs}/n_{ro} > 1$ durch die Verstellung des IVT in der ersten Phase und es muß die Raddrehzahl $n_{rn}$ angepaßt werden. Dies wird jetzt durch eine Anpassung der Motordrehzahl bei konstantem $i_n$ durchgeführt (falls nicht zuvor die Abregellinie 3 erreicht wird). Die Änderung der Motordrehzahl erfolgt nach folgender Beziehung, die sich aus obigen Gleichungen ableiten läßt:

$$n_{ms} = i_n \times n_{ro} \times n_{rs}/n_{ro} \tag{6}$$

Bleiben Geschwindigkeit und Last unverändert, so ist $n_{rs} = n_{ro}$ und damit $n_{ms} = n_{mo}$, und es erfolgt keine Änderung der Motordrehzahl.

Bei Lasterniedrigung ist $n_{rs}/n_{ro} < 1$. Die Motordrehzahl wird entsprechend der Beziehung (6) erniedrigt, falls nicht zuvor die Aufregellinie 1 auf der linken Seite erreicht wird.

**Patentansprüche**

1. Verfahren zur Steuerung des Antriebsstrangs eines Arbeitsfahrzeugs, welcher eine Antriebsmaschine (10) mit Einspritzmengenregelung und ein stufenlos verstellbares Getriebe (16) enthält, bei dem eine anfängliche Motorausgangsdrehzahl ($n_{mo}$), eine anfängliche Raddrehzahl ($n_{ro}$), die aktuelle Motordrehzahl ($n_{mn}$) und die aktuelle Raddrehzahl ($n_{rn}$) erfaßt und gespeichert werden, dadurch gekennzeichnet, daß in einem ersten Schritt die Übersetzung ($n_m/n_r$) des stufenlosen Getriebes gemäß der Beziehung (5)

$$i_n = i_o \times n_{mo}/n_{mn}$$

in der $i_o$ das anfängliche Übersetzungsverhältnis $n_{mo}/n_{ro}$ und $i_n$ ein neues Übersetzungsverhältnis $n_{mn}/n_{rn}$ ist, erhöht bzw. verringert wird, solange $n_{mn} < n_{mo}$ bzw. $n_{mn} > n_{mo}$ ist, und daß in einem zweiten Schritt die Motordrehzahl ($n_m$) bei konstantem Übersetzungsverhältnis $i_n$ gemäß der Beziehung (6)

$$n_{ms} = i_n \times n_{ro} \times n_{rs}/n_{ro},$$

in der $n_{rs}$ für $n_{ro}$ die anfängliche Raddrehzahl und $n_{ms}$ die neue Solldrehzahl des Motors ist, solange gesteigert bzw. abgesenkt wird, bis die anfängliche Raddrehzahl ($n_{rs}$) wieder erreicht ist.

2. Verfahren nach Anspruch 1, dadurch gekennzeichnet, daß der erste und der zweite Schritt in regelmäßigen Zeitintervallen wiederholt werden.

3. Verfahren nach Anspruch 1 oder 2, dadurch gekennzeichnet, daß die anfängliche Raddrehzahl ($n_{ro}$) durch einen von der Bedienungsperson vorgebbaren Radsolldrehzahlwert ($n_{rs}$) ersetzt wird.

4. Verfahren nach einem der Ansprüche 1 bis 3, dadurch gekennzeichnet, daß bei einer aus einer Belastungsänderung resultierenden Motordrehzahländerung mit Hilfe einer gespeicherten Motorcharakteristik in Form von P-Geraden die der neuen Belastung entsprechende Hyperbel konstanter Leistung sowie deren Schnittpunkt mit einer vorgebbaren Aufregellinie (1) oder einer vorgebbaren Vollastregellinie (2) ermittelt wird, und daß in wenigstens einem ersten Schritt die Übersetzung des Getriebes (16) und in wenigstens einem zweiten Schritt die Motordrehzahl angepaßt wird, um günstige Betriebspunkte des Motorkennfeldes hinsichtlich Kraftstoffverbrauch und Emissionsverhalten anzufahren.

5. Verfahren nach Anspruch 4, dadurch gekennzeichnet, daß die günstigen Betriebspunkte auf einer vorgebbaren Aufregellinie (1) oder einer vorgebbaren Vollastregellinie (2) liegen.

6. Verfahren nach den Ansprüchen 1 bis 5, dadurch gekennzeichnet, daß durch eine Handgaseinstellung eine Motordrehzahl vorgebbar ist, die beim Anfahren eines günstigen Betriebspunktes nicht unterschritten wird und für weitere Leistungsabnehmer, beispielsweise eine Zapfwelle, eine definierte Motordrehzahl darstellt.

7. Verfahren nach den Ansprüchen 1 bis 6, dadurch gekennzeichnet, daß die Handgaseinstellung dazu verwandt wird, den Einstellungsbereich zur automatischen Wirkungsgradverbesserung soweit zu reduzieren, daß sich definierte Motordrehzahlen für einen Hilfsantrieb, beispielsweise einen Zapfwellenantrieb einstellen lassen.

8. Verfahren nach einem der Ansprüche 1 bis 7, dadurch gekennzeichnet, daß wenigstens ein durch die Antriebsmaschine (10) antreibbarer weiterer Leistungsabnehmer (Hydraulikpumpe, Zapfwelle, sekundärer Antrieb) vorgesehen ist und die Getriebeübersetzung derart eingestellt wird, daß bei konstanter Motordrehzahl mit zunehmender (abnehmender) Leistungsabnehmerbelastung die Raddrehzahl reduziert (erhöht) wird.

9. Steuereinrichtung zur Steuerung des Antriebsstrangs eines Arbeitsfahrzeuges, welcher eine Antriebsmaschine (10) mit Einspritzmengenregelung und ein stufenlos verstellbares Getriebe (16) enthält, mit Meßgebern zur Erfassung der Motorausgangsdrehzahl ($n_{mo}, n_{mn}$) und der Raddrehzahl ($n_{ro}, n_{rn}$) und mit wenigstens einem Speicher zum Speichern der Meßergebnisse, gekennzeichnet durch eine Recheneinheit zur Durchführung der in einem der Ansprüche 1 bis 5 angegebenen Rechenoperationen und zur Ausgabe von Steuersignalen an die Einspritzmengenregelung der Antriebsmaschine (10) und das stufenlos verstellbare Getriebe (16).

## Claims

1. A method of controlling the drive train of an work vehicle, which has a drive engine (10) with regulation of the fuel injection amount and an infinitely variable transmission (16), in which an initial engine speed of rotation ($n_{mo}$), an initial wheel speed of rotation ($n_{ro}$), the current engine speed of rotation ($n_{mn}$) and the current wheel speed of rotation ($n_{rn}$) are detected and stored, characterized in that in a first step the transmission ratio ($n_m/n_r$) of the infinitely variable transmission is increased / reduced in accordance with the equation (5)

$$i_n = i_o \times n_{mo}/n_{mn}$$

in which $i_o$ is the initial transmission ratio $n_{mo}/n_{ro}$ and $i_n$ is a new transmission ratio $n_{mn}/n_{rn}$, so long as $n_{mn} < n_{mo}$ / $n_{mn} > n_{mo}$ respectively, and in that in a second step the engine speed of rotation ($n_m$) is increased or reduced, with constant transmission ratio $i_n$, in accordance with the equation (6)

$$n_{ms} = i_n \times n_{ro} \times n_{rs}/n_{ro},$$

in which $n_{rs}$ is the initial speed of rotation for $n_{ro}$ and $n_{ms}$ is the new set-point speed of rotation of the engine, until the initial wheel speed of rotation ($n_{rs}$) is reached again.

2. A method according to claim 1, characterized in that the first and second steps are repeated at regular intervals of time.

3. A method according to claim 1 or 2, characterized in that the initial wheel speed of rotation ($n_{ro}$) is replaced by a wheel set point speed of rotation ($n_{rs}$)) which can be preset by the operator.

4. A method according to any of claims 1 to 3, characterized in that in the event of a change in engine speed of rotation resulting from a change in load, the constant power hyperbola corresponding to the new load is determined with the aid of a stored engine characteristic in the form of P lines, as well as its intersection with a predetermined up-control line (1) or a predetermined full load control line (2), and in that the transmission ratio of the transmission (16) is adapted in at least one first step and the engine speed of rotation is adapted in at least one second step so as to move to favourable operating points of the engine map in relation to fuel consumption and emission conditions.

5. A method according to claim 4, characterized in that the favourable operating points lie on a predetermined up-control line (1) or a predetermined full-load control line (2).

6. A method according to any of claims 1 to 5, characterized in that an engine speed can be set by a manual fuel setting which is not to be fallen below on moving to a favourable operating point and which represents a defined engine speed of rotation for further power take-offs, for example a power take-off shaft.

7. A method according to any of claims 1 to 6, characterized in that the manual fuel setting is employed to reduce the range of adjustment for the automatic efficiency improvement to the extent that defined engine speeds of rotation can be set for an auxiliary drive, for example a power take-off shaft.

8. A method according to any of claims 1 to 7, characterized in that at least one further power take-off (hydraulic pump, power take-off shaft, secondary drive) which can be driven by the drive engine (10) is provided and the transmission ratio is so set that the wheel speed of rotation is reduced (increased) at constant engine speed of rotation with increasing (decreasing) power take-off loading.

9. A control device for controlling the drive train of an industrial vehicle which has a drive engine (10) with regulation of the fuel injection amount and an infinitely variable transmission (16), with measuring transducers for detecting the engine output speed of rotation ($n_{mo}$, $n_{mn}$) and the wheel speed of rotation ($n_{ro}$, $n_{rn}$) and at least one memory for storing the measurement results, characterized by a computer unit for caring out the computing operations set out in claims 1 to 5 and for issuing control signals to the fuel injection regulator of the drive engine (10) and to the infinitely variable transmission (16).

## Revendications

1. Procédé pour commander l'unité d'entraînement d'un véhicule de travail, qui contient une machine motrice (10) comportant une unité de réglage de la quantité d'injection et une transmission réglable en continu (16), selon lequel une vitesse de rotation initiale ($n_{mo}$) de sortie du moteur, une vitesse initiale de rotation de roue ($n_{ro}$), la vitesse actuelle de rotation du moteur ($n_{nm}$) et la vitesse actuelle de rotation de roue ($n_{rn}$) sont détectées et mémorisées, caractérisé en ce que dans une première étape, la démultiplication ($n_m/n_r$) de la transmission à fonctionnement continu correspondant à la relation (5)

$$i_n = i_o \times n_{mo}/n_{mn}$$

dans laquelle $i_o$ désigne le rapport initial de démultiplication $n_{mo}/n_{ro}$ et $i_n$ désigne un nouveau rapport de démultiplication $n_{mn}/n_{rn}$, est accrue ou réduite tant que l'on a $n_{mn} < n_{mo}$ ou $n_{mn} > n_{mo}$ et que, lors d'une seconde étape, la vitesse de rotation ($n_m$) du moteur est accrue ou réduite dans le cas d'un rapport de démultiplication $i_n$ constant conformément à la relation (6)

$$n_{ms} = i_n \times n_{ro} \times n_{rs}/n_{ro},$$

dans laquelle $n_{rs}$ pour $n_{ro}$ désigne la vitesse de rotation de roue initiale et $n_{ms}$ désigne la nouvelle vitesse de rotation de consigne du moteur, jusqu'à ce que la vitesse de rotation de roue initiale ($n_{rs}$) soit à nouveau atteinte.

2. Procédé selon la revendication 1, caractérisé en ce que la première étape et la seconde étape sont répétées à des intervalles de temps réguliers.

3. Procédé selon la revendication 1 ou 2, caractérisé en ce que la vitesse de rotation de roue initiale ($n_{ro}$) est remplacée par une valeur de vitesse de rotation de roue de consigne ($n_{rs}$), qui peut être prédéterminée par l'opérateur.

4. Procédé selon l'une des revendications 1 à 3, caractérisé en ce que, dans le cas d'une variation de la vitesse de rotation du moteur, qui résulte d'une variation de la charge, l'hyperbole de puissance constante, qui correspond à la nouvelle charge, ainsi que son point d'intersection avec une courbe pouvant être prédéterminée de régulation montante (1) ou une courbe pouvant être prédéterminée de régulation de pleine charge (2) est déterminée à l'aide d'une caractéristique mémorisée du moteur sous la forme de droites P, et que pendant au moins une première étape, la démultiplication de la transmission (16) et pendant au moins une seconde étape la vitesse de rotation du moteur sont adaptées pour se rapprocher de points de fonctionnement favorables du champ de caractéristiques du moteur en ce qui concerne la consommation de carburant et le comportement d'émission.

5. Procédé selon la revendication 4, caractérisé en ce que les points de fonctionnement appropriés sont situés sur une courbe de régulation montante (1), pouvant être prédéterminée, ou sur une courbe de régulation de pleine charge (2) pouvant être prédéterminée.

6. Procédé selon l'une des revendications 1 à 5, caractérisé en ce que l'on peut prédéterminer à l'aide d'un réglage de l'accélérateur à main, une vitesse de rotation du moteur qui n'est pas dépassée par valeurs inférieures lorsqu'on se rapproche d'un point de fonctionnement approprié et qui représente une vitesse de rotation définie du moteur, pour d'autres dispositifs de prélèvement de puissance, notamment un arbre de prise de force.

7. Procédé selon les revendications 1 à 6, caractérisé en ce que le réglage de l'accélérateur à main est utilisé pour réduire la gmme de réglage pour l'amélioration automatique du rendement de manière à permettre le réglage de vitesses de rotation définies du moteur pour un entraînement auxiliaire, par exemple un entraînement par l'arbre de prise de force.

8. Procédé selon l'une des revendications 1 à 7, caractérisé en ce qu'il est prévu au moins un autre dispositif deprélèvement de puissance (pompe hydraulique, arbre de prise de force, entraînement secondaire) qui peut être entraîné par la machine motrice (10), et que la démultiplication de la transmission est réglée de telle sorte que la vitesse de rotation de roue est réduite (augmentée) dans le cas d'une vitesse de rotation constante du moteur lorsque la sollicitation des dispositifs de prélèvement de puissance augmente (diminue).

9. Dispositif de commande pour commander l'unité d'entraînement d'un véhicule de travail, qui contient une machine motrice (10) pourvue d'une unité de régulation de la quantité d'injection et une transmission réglable en continu (16), comportant des capteurs de mesure servant à détecter la vitesse de rotation ($n_{mo}$, $n_{mn}$) de sortie du moteur et la vitesse de rotation de roue ($n_{ro}$, $n_{rn}$) et comportant au moins une mémoire pour mémoriser les résultats de mesure, caractérisé par une unité de calcul pour exécuter les opérations de calcul indiquées dans l'une des revendications 1 à 5, et pour délivrer des signaux de commande à l'unité de régulation de la quantité d'injection de la machine motrice (10) et à la transmission réglable en continu (16).

EP 0 698 518 B1

Fig. 1

Fig.2

Fig. 3

Fig. 4

13

Fig. 5